# FASCICULE DE BREVET EUROPEEN

(11) **EP 4 396 015 B1**
(45) Date de publication et mention de la délivrance du brevet: **03.09.2025**
(21) Numéro de dépôt: 22768787.8
(22) Date de dépôt: 23.08.2022
(51) Int. Cl.: B60K 11/08, B62D 25/20, B60H 1/00, B60K 1/04, B62D 63/02

(54) **PLATEFORME MODULAIRE D'UN CHÂSSIS DE VÉHICULE AUTOMOBILE ÉLECTRIQUE AVEC MODULE DE REFROIDISSEMENT À TURBOMACHINE TANGENTIELLE**
MODULARE PLATTFORM EINES CHASSIS EINES ELEKTRISCHEN KRAFTFAHRZEUGS MIT EINEM KÜHLMODUL MIT EINER TANGENTIALEN TURBOMASCHINE
MODULAR PLATFORM OF A CHASSIS OF AN ELECTRIC MOTOR VEHICLE, COMPRISING A COOLING MODULE HAVING A TANGENTIAL TURBOMACHINE

(30) Priorité: 03.09.2021 FR 2109262
(43) Date de publication de la demande: 10.07.2024
(73) Titulaire: VALEO SYSTEMES THERMIQUES, 78320 Le Mesnil Saint-Denis (FR)
(72) Inventeur: MAMMERI, Amrid, 78320 Le Mesnil-Saint-Denis (FR); AZZOUZ, Kamel, 78320 Le Mesnil-Saint-Denis (FR); GARNIER, Sebastien, 78320 Le Mesnil-Saint-Denis (FR); NACER BEY, Moussa, 78320 Le Mesnil-Saint-Denis (FR)
(74) Mandataire: Valeo Powertrain Systems
(86) Numéro de dépôt international: PCT/EP2022/073518
(87) Numéro de publication internationale: WO 2023/030976

(56) Documents cités:
- EP-A1- 3 575 118
- WO-A1-2021/171213
- US-A1- 2005 029 027
- US-A1- 2020 406 717
- US-B1- 10 919 575
- MIHALASCU DAN: "Israeli Startup's Next-Gen EV Platform Wants To Reinvent The Wheel | Carscoops", 21 May 2020 (2020-05-21), XP055914364, Retrieved from the Internet <URL:https://www.carscoops.com/2020/05/israeli-startups-next-gen-ev-platform-wants-to-reinvent-the-wheel/> [retrieved on 20220421]

## Description

La présente invention concerne le domaine des plateformes modulaires d'un châssis de véhicule automobile électrique et plus particulièrement les modules de refroidissement pour de telles plateformes modulaires.

Dans le domaine automobile et notamment dans le domaine des véhicules automobiles électriques, pour des raisons de standardisation et d'économie d'échelle, on peut parfois avoir recours à des plateformes modulaires de châssis d'un véhicule automobile électrique. De telles plateformes modulaires , comme celles connues du document US10919575B1 ou de l'article de Dan Mihalascu intitulé "Israeli Startup's Next-Gen EV Platform Wants To Reinvent The Wheel" et publié à l'adresse suivante : https://www.carscoops.com/2020/05/ israeli-startups-next-gen-ev-platform-wants-to-reinvent-the-wheel/ , comportent notamment les batteries, le train de puissance électrique ainsi que la partie cycle, notamment les roues, le système de freinage et de suspension du véhicule automobile. Par train de puissance électrique du véhicule automobile, on entend plus précisément l'électrique de puissance ainsi que le ou les moteurs électriques du véhicule automobile. Une telle plateforme modulaire est utilisée afin d'avoir une plateforme unique, regroupant la plupart des composants de propulsion, d'alimentation et de stockage électrique sur laquelle il est installé des habitacles et des carrosseries divers, correspondant à différents modèles de véhicules automobiles.

Cependant, afin d'améliorer l'autonomie du véhicule électrique, une grande partie de la place au sein de cette plateforme modulaire est réservée aux batteries. Il reste alors peu d'espace pour intégrer un dispositif de gestion thermique permettant la gestion thermique à la fois des batteries et de l'habitacle. Les dispositifs de gestion thermique conventionnels sont généralement encombrants et nécessitent une place importe pour être intégrés dans un véhicule automobile. Les dispositifs de gestion thermique comportent généralement un module de refroidissement comportant au moins un échangeur de chaleur destiné à être traversé par un flux d'air externe. Ce module de refroidissement est l'un des composants du dispositif de gestion thermique le plus imposant. Il est donc difficile de les intégrer au sein d'une telle plateforme modulaire dans laquelle la place libre est réduite tout en conservant une surface d'échange thermique permettant un fonctionnement efficace du dispositif de gestion thermique.

Un des buts de la présente invention est donc de remédier au moins partiellement aux inconvénients de l'art antérieur et de proposer une plateforme modulaire avec une intégration améliorée d'un module de refroidissement.

La présente invention , telle que définie dans la revendication 1, concerne donc une plateforme modulaire d'un châssis de véhicule automobile électrique, ladite plateforme modulaire comportant les batteries ainsi que le train de puissance électrique du véhicule automobile électrique, ladite plateforme modulaire comportant un plancher supérieur et un plancher inférieur entre lesquels est disposé au moins un module de refroidissement destiné à être traversé par un flux d'air externe, ledit module de refroidissement comportant au moins un échangeur de chaleur, destiné à être traversé par le flux d'air externe, et un premier boîtier collecteur accolé audit échangeur de chaleur, ledit premier boitier collecteur formant une volute au sein de laquelle s'étend une turbomachine tangentielle, le premier boitier collecteur comportant une première extrémité ouverte en regard de l'échangeur de chaleur et une deuxième extrémité ouverte à l'extrémité de sa volute, le module de refroidissement étant disposé de sorte que la deuxième extrémité ouverte dudit module de refroidissement fait face à l'un ou l'autre des planchers supérieur ou inférieur de la plateforme modulaire, ledit plancher supérieur ou inférieur comportant une ouverture en regard de la deuxième extrémité ouverte du module de refroidissement.

Avantageusement, la deuxième extrémité ouverte du module de refroidissement fait face au plancher inférieur de la plateforme modulaire, et en ce que ledit plancher inférieur comporte une ouverture en regard de la deuxième extrémité ouverte du module de refroidissement.

Avantageusement, la deuxième extrémité ouverte du module de refroidissement est accolée à l'ouverture de sorte que les bords de ladite deuxième extrémité ouverte sont en contact étanche avec les bords de ladite ouverture.

Avantageusement, l'ouverture comporte une grille de protection.

Avantageusement, l'ouverture comporte un volet mobile entre une position d'ouverture et une position de fermeture de ladite ouverture.

Avantageusement, le volet est un volet piloté par un actionneur.

Avantageusement, le volet est un volet passif comportant un dispositif de rappel en position de fermeture.

D'autres caractéristiques et avantages de la présente invention apparaîtront plus clairement à la lecture de la description suivante, fournie à titre illustratif et non limitatif, et des dessins annexés dans lesquels :
[Fig 1] La figure 1 est une représentation schématique en semi-transparence d'une plateforme modulaire,
[Fig 2a] la figure 2a est une représentation schématique en perspective et en coupe d'un module de refroidissement,
[Fig 2b] la figure 2b est une représentation schématique en perspective et en coupe d'une plateforme modulaire et de son module de refroidissement selon un premier mode de réalisation,
[Fig 2c] la figure 2c est une représentation schématique en perspective et en coupe d'une plateforme modulaire et de son module de refroidissement selon un deuxième mode de réalisation,
[Fig 3] la figure 3 est une représentation schématique en perspective d'un dispositif de chauffage, ventilation et d'air conditionné.

Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations.

Dans la présente description, on peut indexer certains éléments ou paramètres, comme par exemple premier élément ou deuxième élément ainsi que premier paramètre et second paramètre ou encore premier critère et deuxième critère, etc. Dans ce cas, il s'agit d'un simple indexage pour différencier et dénommer des éléments ou paramètres ou critères proches, mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tel critère.

Dans la présente description, on entend par « placé en amont » qu'un élément est placé avant un autre par rapport au sens de circulation d'un fluide. A contrario, on entend par « placé en aval » qu'un élément est placé après un autre par rapport au sens de circulation du fluide.

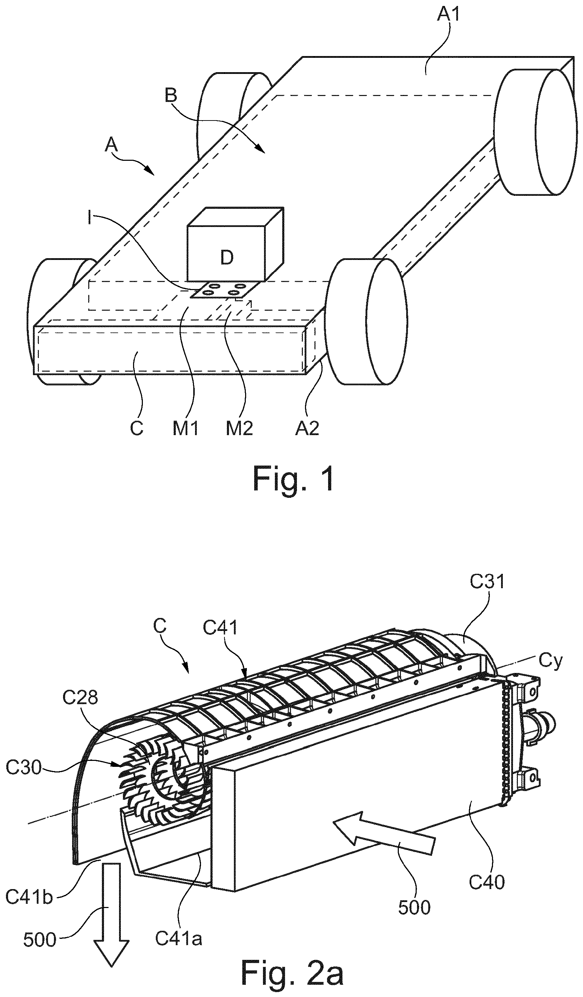

La figure 1 montre une plateforme modulaire A de châssis d'un véhicule automobile électrique. Cette plateforme modulaire A comporte notamment les batteries B, le train de puissance électrique ainsi que la partie cycle du véhicule automobile, notamment les roues, le système de freinage et de suspension du véhicule automobile. Par train de puissance électrique du véhicule automobile on entend plus précisément l'électronique de puissance ainsi que le ou les moteurs électriques du véhicule automobile. Une telle plateforme modulaire A est notamment utilisée afin d'avoir une plateforme sur laquelle peuvent être installés des habitacles et des carrosseries divers.

Afin de permettre la gestion thermique des batteries B ainsi que de l'habitacle, la plateforme modulaire A comporte un dispositif de gestion thermique comportant un ou plusieurs circuits de fluides caloporteurs (non représenté). Le dispositif de gestion thermique comporte plus particulièrement différents modules connectés fluidiquement les uns aux autres afin de former les différents circuits de fluides caloporteurs.

Le dispositif de gestion thermique comporte ainsi un premier module M1 ainsi qu'un deuxième module M2 qui comportent des composants tels que des échangeurs de chaleurs, refroidisseurs, vannes, pompes et compresseurs formant des circuits de circulation de fluides caloporteurs pour la gestion thermique.

Le dispositif de gestion thermique comporte également un module de refroidissement C étant destiné à être traversé par un flux d'air externe 500. Le module de refroidissement C comporte notamment au moins un échangeur de chaleur C40 également destiné à être traversé par le flux d'air externe 500. Ce module de refroidissement C est destiné à être intégré au sein de la plateforme modulaire A, de préférence dans la partie avant de la plateforme modulaire.

Un tel module de refroidissement C est notamment illustré à la figure 2a. Le module de refroidissement C comporte un échangeur de chaleur C40 et un premier boîtier collecteur C41 accolé audit échangeur de chaleur C40. Le premier boîtier collecteur C41 forme une volute avec une première extrémité ouverte C41a disposée en regard de l'échangeur de chaleur C40 et une deuxième extrémité ouverte C41b à l'extrémité opposée de la volute.

Le module de refroidissement C comprend également au moins un ventilateur tangentiel, aussi nommé turbomachine tangentielle C30, configuré de sorte à générer le flux d'air externe 500, par exemple lors de l'arrêt du véhicule automobile ou lorsqu'il est à une vitesse faible. La turbomachine tangentielle C30 comprend un rotor ou turbine (ou hélice tangentielle) C28. La turbine C28 a une forme sensiblement cylindrique. La turbine C28 comporte avantageusement plusieurs étages de pales (ou aubes). La turbine C28 est montée rotative autour d'un axe de rotation Cy, par exemple parallèle au plan formé par l'échangeur de chaleur C40 et s'étendant dans sa largeur. La turbine C28 est plus particulièrement disposée au sein de la volute formée par le premier boitier collecteur. La turbomachine tangentielle C30 est ainsi compacte. L'utilisation d'une telle turbomachine tangentielle C30 permet notamment que le flux d'air externe 500 soit égal sur toute la surface de l'au moins un échangeur de chaleur C40. De plus, une telle turbomachine tangentielle C30 permet un gain de place par rapport à des ventilateurs classiques.

La turbomachine tangentielle C30 peut également comporter un moteur C31 configuré pour mettre en rotation la turbine. Le moteur C31 est par exemple adapté à entraîner la turbine en rotation, à une vitesse comprise entre 200 tour/min et 14 000 tour/min. Ceci permet notamment de limiter le bruit généré par la turbomachine tangentielle C30.

Dans l'exemple illustré à la figure 2a, la turbomachine tangentielle C30 est configurée pour fonctionner en aspiration, c'est-à-dire qu'elle aspire l'air ambiant pour qu'il traverse l'échangeur de chaleur C40 et soit évacué par la deuxième extrémité ouverte C41b de la volute. Alternativement, la turbomachine tangentielle C30 peut fonctionner par refoulement, c'est à dire soufflant l'air depuis la deuxième extrémité ouverte C41b de la volute vers l'échangeur de chaleur C40.

Le module de refroidissement C peut également comporter un deuxième boîtier collecteur (non représenté) accolé à l'échangeur de chaleur C40 sur sa face opposée à celle comportant le premier boitier collecteur C41. Ce deuxième boîtier collecteur peut comporter une ouverture afin de laisser passer le flux d'air externe 500. Cette ouverture peut comporter un dispositif d'obturation (non représenté) mobile entre une première position dite ouverte et une deuxième position dite d'obturation. Ce dispositif d'obturation est notamment configuré pour permettre au flux d'air externe 500 de passer à travers ladite ouverture dans sa position ouverte et obturer ladite ouverture dans sa position d'obturation. Le dispositif d'obturation peut se présenter sous différentes formes comme par exemple sous la forme d'une pluralité de volets montés pivotants entre une position d'ouverture et une position de fermeture. Ces volets sont de préférence montés parallèles à la largeur du module de refroidissement C. Néanmoins, il est tout à fait possible d'imaginer d'autres configurations comme par exemple des volets montés parallèles à la hauteur du module de refroidissement. Les volets peuvent être des volets de type drapeau mais d'autres types de volets comme des volets papillons sont tout à fait envisageables.

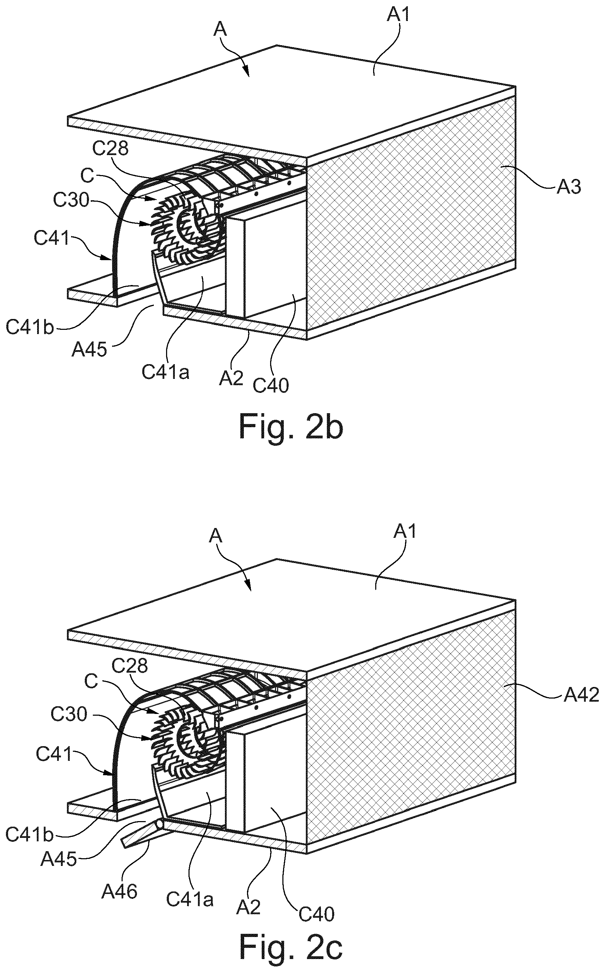

Comme le montre les figures 2b et 2C, la plateforme modulaire A comporte un plancher supérieur A1 et un plancher inférieur A2 entre lesquels est disposé le module de refroidissement C. Par plancher supérieur A1 on entend ici un plancher orienté vers le haut, sur lequel est notamment destiné à être installé une carrosserie et un habitacle. Le plancher inférieur A2 forme quant à lui le sous-bassement de la plateforme modulaire A et est en regard sol. La plateforme modulaire A peut également comporter une grille A42 ou des ouvertures d'air A42, reliant les deux planchers A1, A2 en regard du module de refroidissement C.

Le module de refroidissement C est plus particulièrement disposé entre le plancher supérieur A1 et le plancher inférieur A2 de sorte que la deuxième extrémité ouverte C41b du module de refroidissement C fait face à l'un ou l'autre des planchers supérieur A1 ou inférieur A2. Le plancher supérieur A1 ou inférieur A2 faisant face à la deuxième extrémité ouverte C41b comporte quant à lui une ouverture A45 en regard de ladite deuxième extrémité ouverte C41b du module de refroidissement C. Ainsi, le flux d'air externe 500 peut circuler directement entre la deuxième extrémité ouverte C41b et l'ouverture A45 aussi bien dans un sens que dans l'autre selon que la turbomachine tangentielle C30 fonctionne en aspiration ou en refoulement. Cela permet d'isoler le flux d'air externe 500 des autres composants du dispositif de gestion thermique présents au sein de la plateforme modulaire A, entre les planchers supérieur A1 et inférieur A2.

Comme dans les exemples illustrés aux figures 2b et 2c, le module de refroidissement C est disposé de préférence de sorte que la deuxième extrémité ouverte C41b du module de refroidissement C fait face au plancher inférieur A2 de la plateforme modulaire A. C'est ainsi le plancher inférieur A2 qui comporte l'ouverture A45 en regard de la deuxième extrémité ouverte C41b. En aspiration, le flux d'air externe 500 est ainsi évacué par la deuxième extrémité ouverte C41b du module de refroidissement C sous la plateforme modulaire A.

Afin de renforcer l'isolation du flux d'air externe 500 avec le reste des composants installés entre le plancher supérieur A1 et inférieur A2, la deuxième extrémité ouverte C41b du module de refroidissement C est de préférence accolée à l'ouverture A45 de sorte que les bords de ladite deuxième extrémités ouverte C41b sont en contact étanche avec les bords de ladite ouverture A45.

Avantageusement l'ouverture A45 peut comporter une grille de protection (non représentée) afin de limiter que d'éventuels débris ou projections ne rentrent via l'ouverture A45.

Comme illustré à la figure 2c, l'ouverture A45 peut comporter un volet A46 mobile entre une position d'ouverture et une position de fermeture de ladite ouverture A45. Ce volet A46 peut par exemple un volet de type drapeau ou papillon. Le volet A46 peut être un volet piloté par un actionneur (non représenté) afin de passer d'une position à une autre selon les besoins.

Le volet A46 peut également être un volet passif comportant un dispositif de rappel (non représenté), par exemple un ressort, amenant par défaut le volet A46 en en position de fermeture. Lorsque le flux d'air externe 500 est suffisamment puissant, il peut contrer la force du dispositif de rappel et amener le volet A46 dans sa position d'ouverture. Lorsque le flux d'air externe 500 est absent ou pas assez puissant, le volet A46 est ramené passivement en position de fermeture.

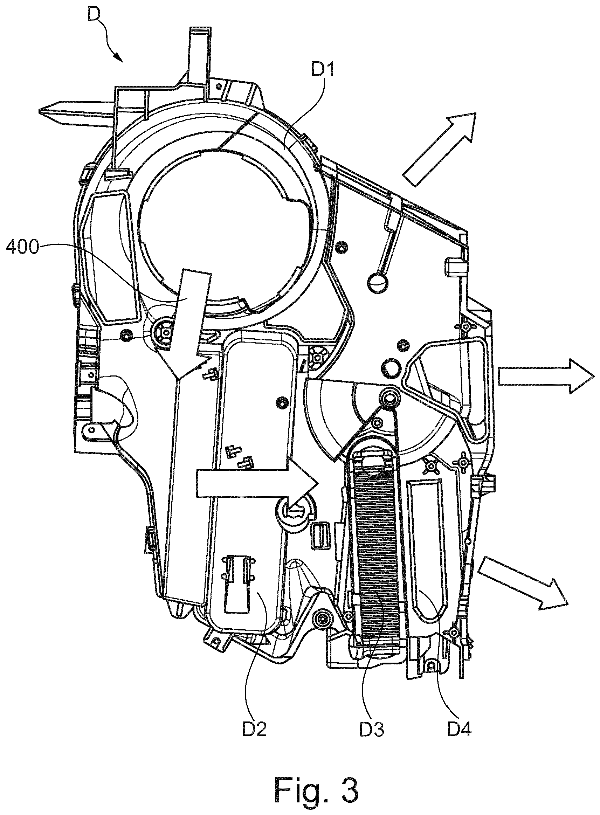

Le dispositif de gestion thermique comporte également un dispositif de chauffage, ventilation et d'air conditionné D destiné à être traversé par un flux d'air interne 400 à destination d'un habitacle. Un tel dispositif de chauffage, ventilation et d'air conditionné D est illustré à la figure 3. Le dispositif de chauffage, ventilation et d'air conditionné D comprend notamment, au sein d'un boitier, un refroidisseur D2, destiné à refroidir le flux d'air interne 400, un échangeur de chaleur D3, destiné à réchauffer le flux d'air interne 400, et un moyen de ventilation D1 configurer pour générer le flux d'air interne 400. Le refroidisseur D2 et l'échangeur de chaleur D3 sont notamment destinés à être connectés aux circuits de fluide caloporteur du dispositif de gestion thermique. Le dispositif de chauffage, ventilation et d'air conditionné D peut également comporter un réchauffeur électrique D4 destiné à réchauffer en appoint le flux d'air interne 400.

Le dispositif de chauffage, ventilation et d'air conditionné D peut notamment être disposé à l'extérieur de la plateforme modulaire A, par exemple au sein d'un habitacle installé sur ladite plateforme modulaire A. Dans ce cas de figure, le dispositif de gestion thermique comporte une interface de connexion I (voir figure 1) destinée à permettre la connexion fluidique du dispositif de chauffage, ventilation et d'air conditionné D à des circuits de fluides caloporteur et aux éléments du dispositif de gestion thermique disposés au sein de la plateforme modulaire A.

Le dispositif de gestion thermique comporte enfin une interface d'échange thermique BAT avec les batteries B. L'interface d'échange thermique BAT est notamment disposée au sein de la plateforme modulaire A et connectée aux circuits de fluide caloporteur du dispositif de gestion thermique.

Les différents modules M1, M2, le module de refroidissement C, le dispositif de chauffage, ventilation et d'air conditionné D et l'interface d'échange thermique BAT avec les batteries B sont connectés les uns autres de sorte à former les différents circuits de fluides caloporteurs.

L'utilisation d'un premier module M1, d'un deuxième module M2 ainsi que d'un module de refroidissement C et d'un dispositif de chauffage, ventilation et d'air conditionné D permet d'avoir un dispositif de gestion thermique compact et pouvant s'intégrer facilement au sein de la plateforme modulaire A

Ainsi, on voit bien que la disposition et le placement de plusieurs modules de refroidissement C, C', C" permet d'obtenir une surface d'échange thermique suffisante et ce en limitant l'encombrement au sein de la plateforme modulaire A.

## Revendications

1. Plateforme modulaire (A) d'un châssis de véhicule automobile électrique, ladite plateforme modulaire (A) comportant les batteries (B) ainsi que le train de puissance électrique du véhicule automobile électrique,
ladite plateforme modulaire (A) comportant un plancher supérieur (A1) et un plancher inférieur (A2) entre lesquels est disposé au moins un module de refroidissement (C) destiné à être traversé par un flux d'air externe (500), ledit module de refroidissement (C) comportant au moins un échangeur de chaleur (C40), destiné à être traversé par le flux d'air externe (500), et un premier boîtier collecteur (C41) accolé audit échangeur de chaleur (C40),
ledit premier boitier collecteur (C41) formant une volute au sein de laquelle s'étend une turbomachine tangentielle (C30),
le premier boitier collecteur (C41) comportant une première extrémité ouverte (C41a) en regard de l'échangeur de chaleur (C40) et une deuxième extrémité ouverte (C41b) à l'extrémité de sa volute,
**caractérisée en ce que** le module de refroidissement (C) est disposé de sorte que la deuxième extrémité ouverte (C41b) dudit module de refroidissement (C) fait face à l'un ou l'autre des planchers supérieur (A1) ou inférieur (A2) de la plateforme modulaire (A), et **en ce que** ledit plancher supérieur (A1) ou inférieur (A2) comporte une ouverture (A45) en regard de la deuxième extrémité ouverte (C41b) du module de refroidissement (C).

2. Plateforme modulaire (A) selon la revendication 1, **caractérisée en ce que** la deuxième extrémité ouverte (C41b) du module de refroidissement (C) fait face au plancher inférieur (A2) de la plateforme modulaire (A), et **en ce que** ledit plancher inférieur (A2) comporte une ouverture (A45) en regard de la deuxième extrémité ouverte (C41b) du module de refroidissement (C).

3. Plateforme modulaire (A) selon l'une quelconque des revendications précédentes, **caractérisée en ce que** la deuxième extrémité ouverte (C41b) du module de refroidissement (C) est accolée à l'ouverture (A45) de sorte que les bords de ladite deuxième extrémité ouverte (C41b) sont en contact étanche avec les bords de ladite ouverture (A45).

4. Plateforme modulaire (A) selon l'une quelconque des revendications 1 à 3, **caractérisée en ce que** l'ouverture (A45) comporte une grille de protection.

5. Plateforme modulaire (A) selon l'une quelconque des revendications 1 à 3, **caractérisée en ce que** l'ouverture (A45) comporte un volet (A46) mobile entre une position d'ouverture et une position de fermeture de ladite ouverture (A45).

6. Plateforme modulaire (A) selon la revendication 5, **caractérisée en ce que** le volet (A46) est un volet piloté par un actionneur.

7. Plateforme modulaire (A) selon la revendication 5, **caractérisée en ce que** le volet (A46) est un volet passif comportant un dispositif de rappel en position de fermeture.

## Patentansprüche

1. Eine modulare Plattform (A) eines Fahrgestells eines Elektromotorfahrzeugs,
wobei die modulare Plattform (A) die Batterien (B) und den elektrischen Antriebsstrang des Elektromotorfahrzeugs umfasst,
wobei die modulare Plattform (A) einen oberen Boden (A1) und einen unteren Boden (A2) umfasst, zwischen denen mindestens ein Kühlmodul (C) angeordnet ist, das dazu bestimmt ist, von einem externen Luftstrom (500) durchströmt zu werden, wobei das Kühlmodul (C) mindestens einen Wärmetauscher (C40) umfasst, der dazu bestimmt ist, von dem externen Luftstrom (500) durchströmt zu werden, und ein erstes Kollektorgehäuse (C41), das an dem Wärmetauscher (C40) befestigt ist,
wobei das erste Kollektorgehäuse (C41) eine Volute bildet, innerhalb der sich eine Tangentialstrom-Turbomaschine (C30) erstreckt,
wobei das erste Kollektorgehäuse (C41) ein erstes offenes Ende (C41a) aufweist, das dem Wärmetauscher (C40) zugewandt ist, und ein zweites offenes Ende (C41b) am Ende seiner Volute,
**dadurch gekennzeichnet, dass** das Kühlmodul (C) so angeordnet ist, dass das zweite offene Ende (C41b) des Kühlmoduls (C) entweder dem oberen (A1) oder dem unteren (A2) Boden der modularen Plattform (A) zugewandt ist, und dass der obere (A1) oder untere (A2) Boden eine Öffnung (A45) aufweist, die dem zweiten offenen Ende (C41b) des Kühlmoduls (C) zugewandt ist.

2. Die modulare Plattform (A) nach Anspruch 1, **dadurch gekennzeichnet, dass** das zweite offene Ende (C41b) des Kühlmoduls (C) dem unteren Boden (A2) der modularen Plattform (A) zugewandt ist, und dass der untere Boden (A2) eine Öffnung (A45) aufweist, die dem zweiten offenen Ende (C41b) des Kühlmoduls (C) zugewandt ist.

3. Die modulare Plattform (A) nach einem der vorhergehenden Ansprüche, **dadurch gekennzeichnet, dass** das zweite offene Ende (C41b) des Kühlmoduls (C) an der Öffnung (A45) befestigt ist, so dass die Kanten des zweiten offenen Endes (C41b) in dichtem Kontakt mit den Kanten der Öffnung (A45) stehen.

4. Die modulare Plattform (A) nach einem der Ansprüche 1 bis 3, **dadurch gekennzeichnet, dass** die Öffnung (A45) ein Schutzgitter umfasst.

5. Die modulare Plattform (A) nach einem der Ansprüche 1 bis 3, **dadurch gekennzeichnet, dass** die Öffnung (A45) einen Verschluss (A46) umfasst, der zwischen einer offenen Position und einer geschlossenen Position der Öffnung (A45) beweglich ist.

6. Die modulare Plattform (A) nach Anspruch 5, **dadurch gekennzeichnet, dass** der Verschluss (A46) ein durch einen Aktuator gesteuerter Verschluss ist.

7. Die modulare Plattform (A) nach Anspruch 5, **dadurch gekennzeichnet, dass** der Verschluss (A46) ein passiver Verschluss ist, der eine Vorrichtung zur Rückführung in die geschlossene Position umfasst.

## Claims

1. A modular platform (A) of an electric motor vehicle chassis, said modular platform (A) comprising the batteries (B) and the electric powertrain of the electric motor vehicle,
said modular platform (A) comprising an upper floor (A1) and a lower floor (A2) between which is arranged at least one cooling module (C) intended to have an external air flow (500) passing through it, said cooling module (C) comprising at least one heat exchanger (C40), intended to have the external air flow (500 passing through it, and a first collector housing (C41) attached to said heat exchanger (C40),
said first collector housing (C41) forming a volute within which a tangential-flow turbomachine (C30) extends,
the first collector housing (C41) having a first open end (C41a) facing the heat exchanger (C40) and a second open end (C41b) at the end of its volute,
**characterized in that** the cooling module (C) is arranged such that the second open end (C41b) of said cooling module (C) faces one or other of the upper (A1) or lower (A2) floors of the modular platform (A), and **in that** said upper (A1) or lower (A2) floor comprises an opening (A45) facing the second open end (C41b) of the cooling module (C).

2. The modular platform (A) as claimed in claim 1, **characterized in that** the second open end (C41b) of the cooling module (C) faces the lower floor (A2) of the modular platform (A), and **in that** said lower floor (A2) comprises an opening (A45) facing the second open end (C41b) of the cooling module (C).

3. The modular platform (A) as claimed in either of the preceding claims,
**characterized in that** the second open end (C41b) of the cooling module (C) is attached to the opening (A45) such that the edges of said second open end (C41b) are in sealed contact with the edges of said opening (A45).

4. The modular platform (A) as claimed in any one of claims 1 to 3, **characterized in that** the opening (A45) comprises a protective grille.

5. The modular platform (A) as claimed in any one of claims 1 to 3, **characterized in that** the opening (A45) comprises a shutter (A46) movable between an open position and a closed position of said opening (A45).

6. The modular platform (A) as claimed in claim 5, **characterized in that** the shutter (A46) is a shutter controlled by an actuator.

7. The modular platform (A) as claimed in claim 5, **characterized in that** the shutter (A46) is a passive shutter comprising a device for returning it to the closed position.
